(19) **Europäisches Patentamt**

**European Patent Office**

**Office européen des brevets**

(11) **EP 0 687 870 B1**

(12) **EUROPEAN PATENT SPECIFICATION**

(45) Date of publication and mention
of the grant of the patent:
**12.01.2000 Bulletin 2000/02**

(51) Int Cl.$^7$: **F24H 1/40**, F24H 8/00

(21) Application number: **95201595.6**

(22) Date of filing: **15.06.1995**

(54) **Heat exchanger**

Wärmetauscher

Echangeur de chaleur

(84) Designated Contracting States:
**AT BE CH DE DK FR GB IT LI NL**

(30) Priority: **15.06.1994 NL 9400980**

(43) Date of publication of application:
**20.12.1995 Bulletin 1995/51**

(73) Proprietor: **ATAG VERWARMING B.V.**
**7131 PE Lichtenvoorde (NL)**

(72) Inventor: **Van Wezel, Michel Martinus Willem**
**NL-6988 BP Lathum (NL)**

(74) Representative:
**Schumann, Bernard Herman Johan et al**
**Arnold & Siedsma,**
**Advocaten en Octrooigemachtigden,**
**Sweelinckplein 1**
**2517 GK Den Haag (NL)**

(56) References cited:
**EP-A- 0 027 055**     **EP-A- 0 337 923**
**EP-A- 0 453 738**     **DE-C- 3 939 133**
**FR-A- 2 105 709**     **GB-A- 2 244 799**

## Description

The invention relates to a heat exchanger, comprising a plurality of substantially mutually parallel metal pipes through which liquid can flow;

a space at least partially bounded by these pipes in which a burner can be accommodated such that the heat coming from the burner can heat via the walls of the pipes the liquid flowing therethrough; which pipes are fixed with their ends in stainless steel end plates which are provided with holes into which the pipes fit, which holes are ordered in a predetermined pattern; which end plates co-act sealingly with respective end walls which together with these end plates form compartments through which the liquid flowing through the pipes can flow; between which end plates at least one closed side wall extends which forms a side boundary of the space in which the pipes are situated while leaving free the said space for the burner and an outlet space situated on the other side of the pipes which connects to an outlet for flue gases. Such a heat exchanger is known from GB-A-2 244 799.

Heat exchangers are known in different embodiments. Even for the same application the design of a heat exchanger can be very different.

It is an object of the invention to design a heat exchanger such that it consists of few components which are each constructed from a single material, which facilitates re-use.

A further object of the invention is to design a heat exchanger such that it can be manufactured at relatively low cost, while the reliability and life-span nevertheless meet very high standards.

The heat exchanger according to the invention comprises pipes made of stainless steel with a wall thickness of $(0,5 \pm 0,2)$ mm and ordered in a pattern such that in a region through which the flue gases flow they have mutual distances of $(1,0 \pm 0,5)$ mm and they shield the side walls from the radiation generated by the burner surface, by overlapping and staggered placing, adjacent placing or mutual coupling, or by welding or soldering of the pipes placed adjacently of the side walls.

The heat exchanger can for example have a more or less cylindrical structure, wherein a central burner space is surrounded by a pattern of pipes lying at a mutual distance. Around these pipes extends a closed wall in order to prevent the uncontrolled escape of flue gases other than through the outlet intended for this purpose.

In another embodiment the heat exchanger is embodied such that the pipes bound a more or less trough-shaped space, in which the burner can be accommodated. The flue gases are guided through a plurality of pipes placed at a mutual distance for feeding to the outlet, which connects in gastight manner to, in this case, two side walls and to the end plates.

It will also be apparent that there may be a strict physical separation between the burner space and the spaces through which the flue gases flow and the spaces through which the liquid for heating flows.

The structure according to the invention offers a very favourable compromise between heat conduction, pressure resistance and the price of the heat exchanger.

In order to realise the required mutual distance between at least a number of pipes of $(1,0 \pm 0,5)$ mm a heat exchanger according to the invention can advantageously display the special feature that the end zones of the pipes supported by the end plates have a reduced outer diameter. Hereby achieved is that the amount of material of the end walls between the holes accommodating the pipes is greater than between the pipes. This is advantageous from the viewpoint of production technique and moreover provides an increased mechanical strength.

Very suitable is the embodiment in which the pipes are coupled with their ends to the end plates by high temperature soldering, for instance in vacuum or with a protective gas.

The heat exchanger according to the invention has a certain flow resistance against the heat-bearing combustion gases coming from the burner. When the exchanger comes into condensing operation, which is aimed for in principle in order to obtain maximum efficiency, condensation is collected in the spaces between the pipes. This results in a considerable increase in the effective flow resistance, possibly even to the extent of a (partial) blockage.

In this respect the heat exchanger according to the invention preferably has the special feature that the pipes bound a space for the burner, which space generally has the shape of a trough open to the top; under the heat exchanger is arranged a collecting tray for condensation to which an outlet optionally connects; and the heat exchanger is disposed such that the pipes extend at a chosen angle to the horizontal plane. The formed condensation is drained rapidly due to this inclining positioning.

In an embodiment in which the said angle has a value of $(7 \pm 4)°$, preferably $(7 \pm 1)°$, a very rapid discharge of condensation takes place and there is no measurable difference between the said flow resistance during "dry" operation and "wet" operation.

A very advantageous embodiment of the heat exchanger according to the invention comprises an arrangement and disposition of the pipes such that the hot gases coming from the burner are first subjected to a limited cooling through a plurality of pipes of relatively large diameter and relatively large mutual distances, followed by a strong cooling through the said group of pipes of relatively small diameter.

As already stated above, the heat exchanger comprises a plurality of pipes ordered relative to the burner such that the hot gases generated by the burner can give off their heat via the walls of the pipes to the heat exchanging medium flowing through the pipes, in particular water. The heat is created by combusting gaseous fuel with air. The reaction proceeds approximately thus:

$$2 \, CH_4 + 3 \, O_2 \rightarrow 2 \, CO + 4 \, H_2O,$$

followed by

$$2 \, CO + O_2 \rightarrow 2 \, CO_2.$$

The latter reaction is of particular importance.

The temperature of the combustion gases is about 1500°C-1800°C immediately after the burner. At this temperature there is a balance between the gaseous components such that a considerable proportion of CO is present. With a temperature reduction CO transposes into $CO_2$. However, when cooling proceeds very rapidly the situation is as it were frozen and a part of the CO cannot continue to react sufficiently in the manner indicated. This CO is then found in the emission of the combustion device. Because of the above described structure according to 6, only a relatively small portion of the heat is extracted in the first instance from the hot flue gases, whereby the reaction can be controlled such that all the CO can be converted into $CO_2$. The flue gas temperature is lowered from 1500-1800°C to 1100°. At this temperature all the CO can be converted into $CO_2$ in the manner indicated.

The invention will now be elucidated with reference to annexed drawings of an embodiment. Herein:

figure 1 shows an exploded view of an embodiment of the heat exchanger according to the invention;
figure 2 shows a broken-away perspective view of the detail II of figure 1; and
figure 3 is a perspective view of a part of a variant of the heat exchanger according to figure 1.

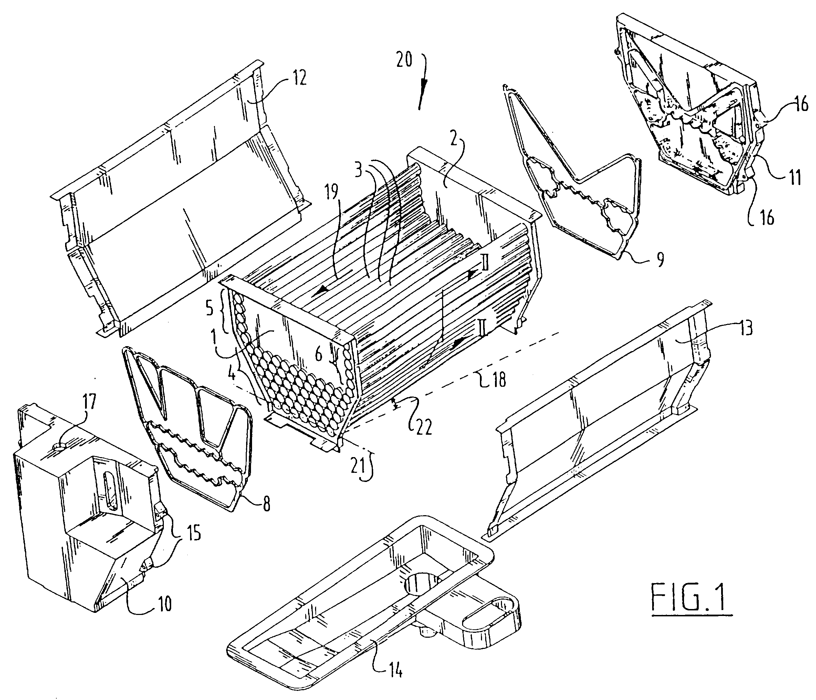

Figure 1 shows an exploded view of an embodiment of the heat exchanger according to the invention.

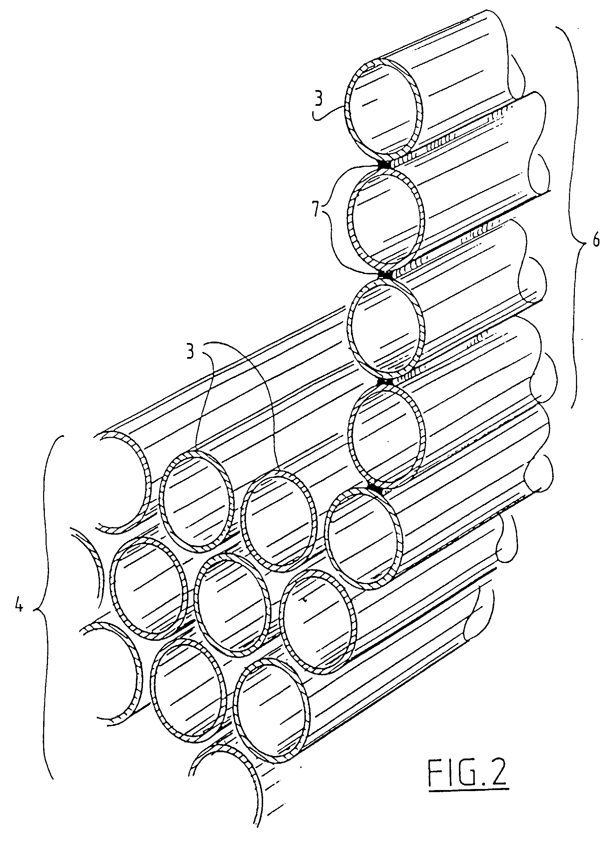

Two stainless steel end plates 1, 2 are provided with holes and thus serve to support the end zones of stainless steel pipes in the shown pattern, which can be seen particularly clearly with reference to the outer side of end plate 1. On the underside is situated a pattern 4 of, in this embodiment six layers of pipes which have mutual distances of about 1,0 mm and have a wall thickness of 0,5 mm. Connecting onto the pattern 4 on either side are patterns 5, 6, each consisting of a row of pipes 3 soldered to each other. In this respect reference is now made to figure 2 which shows that the pipes situated in pattern 6 are mutually connected by soldered seams 7. The reason for this mutual connection will be discussed hereinafter.

It will be apparent from the patterns 4, 5 and 6 that the pipes 3 together with end plates 1, 2 bound a trough-shaped space. In this space can be received a gas burner which generates its heat in a downward direction. The flue gases from the burner flow through the bank of pipes in the pattern 4.

As can be seen in the exploded view of figure 1, end walls 10, 11 connect sealingly to the end plates 1, 2 via seals 8, 9, which end walls together with these end plates 1, 2 bound in the manner shown compartments through which liquid can flow in a pre-selected manner.

Side walls 12, 13 further extend between the end walls 10 and 11 on either side of the patterns 4, 5, 6. On the underside of the pattern 4 a flue gas outlet 14 connects sealingly against the end walls 10, 11 and the side walls 12, 13. The various components are mutually connected in suitable manner, for example by screw means and the like. Use can for instance be made of threaded draw bolts, which pull the end walls 10, 11 with force toward each other via eyes 15, 16 respectively, whereby the constituent parts of the heat exchanger are held together sealingly.

Attention is drawn to the fact that the end wall 10 has a venting 17.

The presence of the soldered seams 7 between the pipes 3 in patterns 5 and 6 ensures that the side walls 12, 13 are shielded against direct radiation heat from the flame generated by the burner. Alternatively, the pipes 3 in patterns 5, 6 could also be placed overlapping and staggered, whereby a shade effect would be obtained. The mutual connection of pipes 3 and patterns 5, 6 can take place very suitably by vacuum soldering, for example with Ni, Cr, Si at a temperature in the order of 1300°C.

All components parts are substantially manufactured from a single material.

It will be apparent that each component must be resistant to the physical conditions in which it is loaded. Particular attention must be paid to the maximum temperatures and pressures reached.

In addition, a strict physical separation must exist under all conditions between on the one hand the liquid circuits defined by the end walls 10, 11, the seals 8, 9, the end plates 1, 2 and the pipes 3 and on the other hand the trough-shaped space for the burner and the spaces through which the flue gases flow, which are bounded by the pipes 3, the end plates 1, 2, the side plates 12, 13 and the flue gases outlet 14. This tray-like flue gas outlet 14 also serves to collect condensation coming from pipes 3, in particular the banks of pipes 3 arranged with mutual interspacing. For this purpose the whole heat exchanger designated with the reference numeral 20 is disposed inclining at an angle of approximately 7°. It should be understood in this context that this inclination can be described as a tilting round a horizontal tilt axis 21 such that the mutually parallel pipes extend at an angle 22 of 7° indicated with a horizontal dashed line 18. During condensing operation of heat exchanger 20 an effective draining of the condensation accumulating between the pipes 3 takes place in the direction indicated by arrow 19. The condensation is then carried away downward via end plate 1 and collected in tray 14.

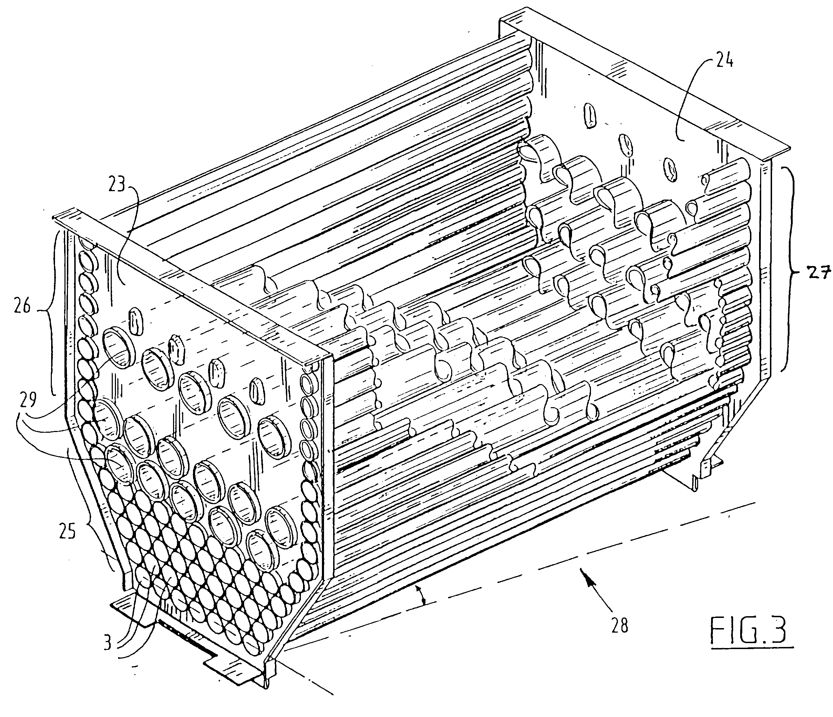

Figure 3 shows a part of a heat exchanger in a preferred embodiment. Two stainless steel end plates 23, 24 are provided with holes and thus serve to support the end zone of stainless steel pipes in the pattern shown in figure 3. On the underside is situated a pattern 25 of five layers of pipes which have mutual distances of about 1,0 mm and a wall thickness of 0,5 mm. Connecting on either side to the pattern 25 are patterns 26, 27, each consisting of a row of mutually soldered pipes. The relatively thin pipes 3 of patterns 25, 26 and 27 bound together with the end plates 23, 24 a trough-shaped space. Thusfar the structure according to figure 3 corresponds with the structure shown in figure 1, apart from the plurality of layers of pipes 3 in pattern 25. However, the unit 28 according to figure 3 has a plurality of additional pipes 29 of relatively large diameter. In a first upper layer of five pipes 29 ordered in one plane, a first relatively slight cooling of the flue gases takes place, followed by a subsequent cooling through two rows of pipes 29 located lower down and mutually staggered, where a further cooling takes place. It is particularly in the space between the upper and the subsequent row of pipes 29 where the reaction of CO to $CO_2$ can take place. The distance between these rows of pipes provides the time for the necessary shift in the balance to take place.

Finally, the pipe pattern 25 placed downstream relative to the bottom row of pipes 29 provides the greatest power transfer. The greatest transfer of heat takes place here. Reactions of the stated type no longer take place in this phase.

**Claims**

1. Heat exchanger (20, 28), comprising:

    a plurality of substantially mutually parallel metal pipes (3) through which liquid can flow;
    a space at least partially bounded by these pipes (3) in which a burner can be accommodated such that the heat coming from the burner can heat via the walls of the pipes the liquid flowing therethrough;
    which pipes (3) are fixed with their ends in stainless steel end plates (1, 2, 23, 24) which are provided with holes into which the pipes (3) fit, which holes are ordered in a predetermined pattern (4, 5, 6, 25, 26, 27);

    which end plates (1, 2, 23, 24) co-act sealingly with respective end walls (10, 11) which together with these end plates (1, 2, 23, 24) form compartments through which the liquid flowing through the pipes (3) can flow;
    between which end plates (1, 2, 23, 24) at least one closed side wall (7) extends which forms a side boundary of the space in which the pipes (3) are situated while leaving free the said space for the burner and an outlet space situated on the other side of the pipes (3) which connects to an outlet for flue gases;
    whereby the pipes (3) are made of stainless steel with a wall thickness of $(0,5 \pm 0,2)$ mm and are ordered in said pattern (4, 5, 6, 25, 26, 27) such that in a region (4, 25) through which the flue gases flow they have mutual distances of $(1,0 \pm 0,5)$ mm, and they shield the side walls (12, 13) from the radiation generated by the burner surface by overlapping and staggered placing, adjacent placing or mutual coupling or by welding or soldering, of the pipes (3) placed adjacently of the side walls (12, 13).

2. Heat exchanger as claimed in claim 1, wherein the end zones of the pipes (3) supported by the end plates (1, 2, 23, 24) have a reduced outer diameter.

3. Heat exchanger as claimed in claim 1, wherein the pipes (3) are coupled with their ends to the end plates (1, 2, 23, 24) by high temperature soldering, for example in vacuum or with a protective gas.

4. Heat exchanger as claimed in claim 1, wherein the pipes (3) bound a space for the burner, which space generally has the shape of a trough open to the top;

    under the heat exchanger (20, 28) is arranged a collecting tray (14) for condensation to which an outlet optionally connects; and
    the heat exchanger (20, 28) is disposed such that the pipes (3) extend at a chosen angle to the horizontal plane.

5. heat exchanger as claimed in claim 4, wherein the said angle has a value of $(7 \pm 4)°$, preferably $(7 \pm 1)°$.

6. Heat exchanger as claimed in claim 1, comprising an arrangement and disposition of the pipes (3) such that the hot gases coming from the burner are first subjected to a limited cooling through a plurality of additional pipes (29) of larger diameter and relatively larger mutual distances, followed by a strong cooling through the said group of pipes (3) of smaller diameter.

## Patentansprüche

1. Wärmetauscher (20,28) mit:

    mehreren im wesentlichen wechselseitig parallelen Metalleitungen (3), durch welche eine Flüssigkeit fließen kann;

    einem Raum, der zumindest teilweise durch diese Leitungen (3) begrenzt wird, in welchem ein Brenner angeordnet werden kann, so daß die von dem Brenner kommende Wärme über die Wände der Leitungen die durch diese fließende Flüssigkeit erwärmen kann;

    wobei die Leitungen (3) mit ihren Enden in Endplatten (1, 2, 23, 24) aus rostfreiem Stahl befestigt sind, die mit Löchern versehen sind, in die die Leitungen (3) passen, wobei die Löcher nach einem vorbestimmten Muster (4, 5, 6, 25, 26, 27) angeordnet sind;

    wobei die Endplatten (1, 2, 23, 24) zusammen mit entsprechenden Endwänden (10, 11) abdichtend wirken, welche zusammen mit diesen Endplatten (1, 2, 23, 24) Räume bilden, durch die die durch die Leitungen (3) fließende Flüssigkeit fließen kann;

    wobei sich zwischen den Endplatten (1, 2, 23, 24) mindestens eine geschlossene Seitenwand (7) erstreckt, die eine seitliche Begrenzung des Raumes bildet, in welchem die Leitungen (3) angeordnet sind, während der Raum für den Brenner und ein Auslaßraum freigelassen wird, der an der anderen Seite der Leitungen (3) angeordnet ist, der mit einem Auslaß für Verbrennungsgase verbunden ist;

    und wobei die Leitungen (3) aus einem rostfreien Stahl mit einer Wanddicke von $(0,5 \pm 0,2)$ mm hergestellt sind, und nach dem Muster (4, 5, 6, 25, 26, 27) angeordnet sind, so daß sie in einem Bereich (4, 25) durch welchen die Verbrennungsgase fließen, wechselseitige Abstände von $(1,0 \pm 0,5)$ mm haben, und sie die Seitenwände (12, 13) von der Strahlung abschirmen, die von der Oberfläche des Brenners erzeugt wird, durch überlappende und versetzte Anordnung, aneinander angrenzende Anordnung, oder wechselseitiges Verbinden, oder durch Schweißen oder Löten der Leitungen (3), die angrenzend an die Seitenwände (12,13) angeordnet sind.

2. Wärmetauscher gemäß Anspruch 1, bei welchem die Endzonen der Leitungen (3), die von den Endplatten (1, 2, 23, 24) getragen werden, einen verringerten Außendurchmesser haben.

3. Wärmetauscher gemäß Anspruch 1, bei welchem die Leitungen (3) mit ihren Enden mit den Endplatten (1, 2, 23, 24) mittels Hochtemperaturlöten, beispielsweise in einem Vakuum oder mit einem Schutzgas, verbunden werden.

4. Wärmetauscher gemäß Anspruch 1, bei welchem die Leitungen (3) einen Raum für den Brenner begrenzen, welcher im allgemeinen die Form einer Wanne hat, die nach oben hin offen ist;

    wobei unter dem Wärmetauscher (20, 28) ein Sammelboden (14) für ein Kondensat angeordnet ist, mit dem optional ein Auslaß verbunden ist;

    und der Wärmetauscher (20, 28) so angeordnet ist, daß sich die Leitungen (3) mit einem gewählten Winkel zu der horizontalen Ebene erstrecken.

5. Wärmetauscher gemäß Anspruch 4, bei welchem der Winkel einen Wert von $(7 \pm 4)°$, vorzugsweise $(7 \pm 1)°$ hat.

6. Wärmetauscher gemäß Anspruch 1, bei welchem die Leitungen (3) derart angeordnet und verteilt sind, daß die von dem Brenner kommenden heißen Gase zunächst einer beschränkten Kühlung durch mehrere zusätzliche Leitungen (29) mit größerem Durchmesser und relativ größeren wechselseitigen Abständen unterzogen werden, gefolgt von einer starken Kühlung durch die Gruppe von Leitungen (3) mit kleinerem Durchmesser.

## Revendications

1. Echangeur de chaleur (20,28) comprenant :

    une pluralité de tubes métalliques (3) sensiblement parallèles entre eux, dans lesquels un liquide peut circuler ;
    un espace au moins délimité partiellement par ces tubes (3) et dans lequel un brûleur peut être logé de sorte que la chaleur délivrée par le brûleur peut chauffer, par l'intermédiaire des parois des tubes, le liquide circulant dans ces derniers ;
    lesquels tubes (3) sont fixés, par leurs extrémités, dans des plaques d'extrémité en acier inoxydable (1,2,23,24), qui sont pourvues de trous dans lesquels sont montés les tubes (3), lesquels trous sont disposés selon un réseau prédéterminé (4,5,6,25,26,27) ;
    lesquelles plaques d'extrémité (1,2,23,24) coopèrent d'une manière étanche avec des parois d'extrémité respectives (10,11), qui forment, avec ces plaques d'extrémité (1,2,23,24), des compartiments, dans lesquels peut circuler le liquide qui circule dans les tubes (3) ;

entre les plaques d'extrémité (1,2,23,24) s'étend au moins une paroi latérale fermée (7), qui forme une limite latérale de l'espace dans lequel les tubes (3) sont disposés, tout en laissant libre ledit espace pour le brûleur et un espace de sortie situé sur l'autre côté des tubes (3), qui est raccordé à une sortie pour les gaz de cheminées ;

et dans lequel les tubes (3) sont réalisés en acier inoxydable avec une épaisseur de paroi de $(0,5 \pm 0,2)$ mm et sont rangés dans ledit réseau (4,5,6,25,26,27) de telle sorte que dans une région (4,25), dans laquelle les gaz de cheminées circulent, les tubes sont séparés par des distances réciproques de $(1,0 \pm 0,5)$ mm et ils protègent les parois latérales (12,13) vis-à-vis d'un rayonnement produit par la surface du brûleur, par chevauchement et positionnement étagé, positionnement adjacent ou couplage mutuel ou par brasage ou soudage des tubes (3) disposés au voisinage de parois latérales (12,13).

2. Echangeur de chaleur selon la revendication 1, dans lequel les zones d'extrémité des tubes (3) supportées par les plaques d'extrémité (1,2,23,24) ont un diamètre extérieur réduit.

3. Echangeur de chaleur selon la revendication 1, dans lequel les tubes (3) sont couplés, par leurs extrémités, aux plaques d'extrémité (1,2,23,24) au moyen d'un brasage à haute température, par exemple sous vide ou sous gaz protecteur.

4. Echangeur de chaleur selon la revendication 1, dans lequel les tubes (3) délimitent un espace pour le brûleur, lequel espace possède d'une manière générale la forme d'une auge ouverte à sa partie supérieure ;

au-dessous de l'échangeur de chaleur (20,28) est disposé un bac (14) de collecte de la condensation, auquel est raccordée facultativement une sortie ; et

l'échangeur de chaleur (20,28) est disposé de telle sorte que les tubes (3) s'étendent suivant un angle choisi par rapport au plan horizontal.

5. Echangeur de chaleur selon la revendication 4, dans lequel ledit angle possède une valeur de $(7 \pm 4)°$, de préférence $(7 \pm 1)°$.

6. Echangeur de chaleur selon la revendication 1, comprenant un agencement et une disposition des tubes (3) tels que les gaz chauds provenant du brûleur sont tout d'abord soumis à un refroidissement limité dans une pluralité de tubes supplémentaires (21) ayant un diamètre supérieur et séparés par des distances réciproques relativement plus importantes, ceci étant suivi par un refroidissement intense dans ledit groupe de tubes (3) ayant un diamètre plus petit.

FIG.1

FIG.2

FIG.3